# EUROPÄISCHE PATENTANMELDUNG

(11) **EP 4 568 034 A1**
(43) Veröffentlichungstag der Anmeldung: **11.06.2025**
(21) Anmeldenummer: 24217422.5
(22) Anmeldetag: 04.12.2024
(51) Int. Cl.: H02G 3/08

(54) **INSTALLATIONSDOSE**

(30) Priorität: 07.12.2023 DE 102023134371
(71) Anmelder: Kaiser GmbH & Co. KG, 58579 Schalksmühle (DE)
(72) Erfinder: Glörfeld, Maik, 58515 Lüdenscheid (DE); KASSÜHLKE, Rüdiger, 57482 Wenden (DE); Viola, Marc, 58339 Breckerfeld (DE)
(74) Vertreter: Rentsch Partner AG

(57) **Zusammenfassung**

Die vorliegende Erfindung bezieht sich auf eine Installationsdose (1) für Elektroinstallationen umfassend einen Dosenkörper (2) mit einer röhrenförmigen Dosenwand (3), welche in einen Dosenboden (4) übergeht. In dem Dosenkörper (2) ist mindestens eine Dosenöffnung (7) angeordnet, welche in einem initialen Zustand von einer jeweiligen Membran (8) aus einem weichelastischen Material verschlossen ist. Der Dosenkörper (2) weist weiter in einem vorderseitigen Bereich des Dosenkörpers (2) mindestens eine Befestigungsöffnung (9) auf, wobei die mindestens eine Befestigungsöffnung (9) an einer gleichen Umfangsposition angeordnet ist, wie die mindestens eine Dosenöffnung (7).

## Beschreibung

Die vorliegende Erfindung bezieht sich auf eine Installationsdose zur Aufnahme einer Elektroinstallation und für den Einbau in Massivholzwände.

Um elektrische Schalter, Steckdosen, Lampen, Apparate, etc. an den dazu vorgesehenen Stellen in einem Gebäude eines Bauwerkes anbringen zu können, werden unter anderem Installationsdosen verwendet. Unter solchen Installationsdosen werden beispielsweise Unterputzdosen, Einlasskästen, Unterputzabzweigdosen, Verteilerdosen und dergleichen verstanden.

Massivholzwände bestehen häufig aus Brettsperrholz und/oder Brettstapelholz. Bei der Leitungsverlegung in Massivholz ergeben sich im Vergleich zu anderen Einsatzbereichen von Installationsdosen (wie z.B. Hohlwänden) oft grosse fertigungsbedingte Toleranzen. Während im Hohlraum von Hohlwänden die Installationsleitungen weitestgehend frei verlegt werden können, müssen dazu in Massivholzwänden vor der Montage der Installationsdose Nuten oder Bohrungen in die Wand gefräst werden, in die später die Installationsleitungen verlegt werden. Da diese Nuten, bzw. Bohrungen oft mehrere Meter lang sind, ergeben sich bei der Herstellung größere Abweichungen in der Lage zur (ebenfalls eingefrästen) Wandöffnung für die Installationsdose. Diese Abweichungen können bis zu 2cm betragen. Dies bedeutet, dass die Zuführung der Installationsleitungen (z.B. im Winkel und/oder in der Lage) an der Dose stark variieren kann. Folglich ist die Ausrichtung derartigen Installationsdosen in der Regel erschwert.

Eine Aufgabe der Erfindung besteht darin eine verbesserte Installationsdose für den Einbau in Massivholzwänden bereitzustellen.

Die vorliegende Erfindung bezieht sich auf eine Installationsdose für eine Elektroinstallation und für den Einbau in eine Wandöffnung einer Massivholzwand. Die Installationsdose umfasst einen Dosenkörper aus einer ersten Kunststoffkomponente mit einem Dosenboden und einer in den Dosenboden übergehenden röhrenförmigen Dosenwand. Die röhrenförmige Dosenwand erstreckt sich hierbei in eine axiale Richtung und um eine Mittelachse der Installationsdose. Für den Übergang in den Dosenboden kann die Dosenwand einen abgeflachten und/oder abgerundeten Übergangsbereich umfassen. Der Dosenkörper umgibt einen Innenraum der (vorderseitig) über eine dem Dosenboden gegenüberliegende Installationsöffnung zugänglich ist. An dem vorderseitigen Ende der röhrenförmigen Dosenwand kann der Dosenkörper ferner einen seitlich von der Dosenwand abragenden Rand aufweisen. Der Rand dient zur Auflage an einer die Wandöffnung umgebenden Wandoberfläche.

Die Installationsdose stellt weiter einen Installationsraum zur Aufnahme (und Montage) der Elektroinstallation bereit, welcher durch die Installationsöffnung zugänglich ist. Je nach Ausgestaltung kann der Innenraum des Dosenkörpers dem Installationsraum entsprechen. Falls weitere Elemente der Installationsdose innen an dem Dosenkörper angebracht sind (wie beispielsweise die weiter unten erläuterten Brandschutzsegmente und/oder eine optional darauf angebrachte isolierende Schicht), kann der Installationsraum jedoch auch kleiner als der Innenraum des Dosenkörpers sein. In anderen Worten umfasst der Innenraum des Dosenkörpers den Installationsraum.

Je nach Anwendung kann die Dosenwand in eine Umfangsrichtung einander abwechselnde erste und zweite Umfangsbereiche umfassen. Mit Vorteil sind je zwei erste und zweite Umfangsbereiche oder je vier erste und zweite Umfangsbereiche vorhanden. Mit Vorteil ist die Installationsdose jedoch aus der axialen Richtung betrachtet achsensymmetrisch ausgestaltet ist. D.h. mit Vorteil sind vier erste und zweite Umgangsbereiche vorhanden. Dies erlaubt einen flexiblen Einbau der Installationsdose. Die ersten Umfangsbereiche sind hierbei diejenigen Umfangsbereiche, welche bei einer Aneinanderreihung mehrerer baugleicher Installationsdosen aneinander anliegen. Die jeweiligen ersten Umfangsbereiche erstrecken sich daher mit Vorteil normal zu einer jeweiligen Verbindungsrichtung der Installationsdose. In anderen Worten sind die ersten Umfangsbereich im Wesentlichen flach ausgestaltet. Die Verbindungsrichtung steht hierbei senkrecht auf der Mittelachse der Installationsdose. Eine Installationsdose kann also pro ersten Umfangsbereich eine Verbindungsrichtung aufweisen. Für eine optimale Verbindung zweier Installationsdosen kann es weiter vorteilhaft sein, wenn der Rand im Bereich der ersten Umfangsbereiche mindestens eine Sollbruchstelle aufweist über welche ein Randbereich des Randes abtrennbar ist. Mit Vorteil erstreckt sich die mindestens eine Sollbruchstelle entlang einer Kontur des entsprechenden ersten Umfangsbereichs (aus der axialen Richtung betrachtet). Im Gegensatz zu den ersten Umfangsbereichen, können die jeweiligen zweiten Umfangsbereiche gekrümmt ausgestaltet sein. Die mehreren gekrümmten (zweiten) Umfangsbereiche folgen hierbei mit Vorteil einer gemeinsamen Kreiskontur.

Weiterhin umfasst der Dosenkörper eine oder mehrere Dosenöffnungen. Vorzugsweise ist eine Dosenöffnung pro ersten Umfangsbereich vorgesehen. Die jeweilige Dosenöffnung(en) befinden sich mit Vorteil zumindest bereichsweise in einem rückseitigem Bereich des Dosenkörpers. Der rückseitige Bereich ist hierbei derjenige Bereich, welcher zum Dosenboden hingewandt ist. Je nach Ausgestaltung kann sich eine jeweilige Dosenöffnung über die Dosenwand (bzw. einen entsprechenden ersten Umfangsbereich der Dosenwand) und den Übergangsbereich erstrecken. Allerdings ebenfalls denkbar ist, dass sich die Dosenöffnung weiter über den Dosenboden erstreckt. In einem initialen Zustand (vor der Montage) kann die jeweilige Dosenöffnung von einer Membran aus einem weichelastischen Material verschlossen sein.

Je nach Anwendung kann der Dosenkörper einen sich zumindest bereichsweise um die mindestens eine Dosenöffnung erstreckenden Tunnel aufweisen. D.h. der Rand der Dosenöffnung wird durch den Tunnel gebildet. Dieser erstreckt sich mit Vorzug in den Innenraum des Dosenkörpers hinein. Der Tunnel umfasst ein proximales Ende, an welchem der Tunnel in die Dosenwand und/oder den Dosenboden übergeht und ein (freies) distales Ende. Die die Dosenöffnung initial verschliessende Membran kann hierbei an dem distalen Ende des Tunnels angeformt sein. Falls kein Tunnel vorhanden ist, kann diese jedoch auch direkt an der Dosenwand und/oder dem Dosenboden angeformt sein.

In der jeweiligen Membran kann ferner mindestens eine heraustrennbare Einführzone angeordnet sein. In einem herausgetrennten Zustand der Einführzone wird eine Einführöffnung für eine Installationsleitung freigegeben. Durch den Tunnel können ebenfalls die Einführzone(n), respektive die Einführöffnung(en) in Bezug zur Dosenwand in radialer Richtung nach innen versetzt sein. Dies erleichtert den Einbau der Installationsdose mit bereits vormontierten Installationsleitungen in einer Wandöffnung. Weiterhin erlaubt der durch die zurückversetzte Membran entstehende Freiraum einen Toleranzausgleich zwischen der Lage der Installationsleitung in der in das Massivholz gefrästen Nut, bzw. Bohrung und der Position der Einführöffnung in der Membran. Für ein einfaches Heraustrennen kann die Einführzone ferner zumindest bereichsweise von einer Dünnstelle umgeben sein. Eine jeweilige Einführzone ist hierbei mit Vorteil derart in der Membran angeordnet, dass diese zu allen Seiten von dem Rand der Dosenöffnung beabstandet ist. Dies ermöglichst u.a. eine richtungsflexiblere Einführung einer Installationsleitung und erlaubt einen Toleranzausgleich. Weiterhin können unterschiedliche Durchmesser der Installationsleitungen durch die dehnbare Membran eingeführt werden.

Weiter kann die Membran mindestens eine Versteifungsstruktur umfassen. Die Versteifungsstruktur minimiert hierbei das Risiko, dass die Membran beim Einführen einer (insbesondere grösseren) Installationsleitung und/oder Installationsleitung mit starken Positionsversatz einreisst. Die Versteifungsstruktur kann die Installationsleitung zudem dichtend umgeben und/oder eine Zugentlastung bereitstellen. Hierzu kann die mindestens eine Versteifungsstruktur mindestens eine zumindest bereichsweise um die Einführzone umlaufende Rippe und/oder mindestens einen Versteifungssteg umfassen. Die Versteifungsstruktur, respektive die mindestens eine Rippe und der mindestens eine Versteifungssteg sind mit Vorteil aus demselben Material wie die Membran geformt. Somit kann die Versteifungsstruktur durch eine lokale Verdickung der Membran ausgebildete sein. Jedoch ist es ebenfalls denkbar, dass die Versteifungsstruktur zumindest bereichsweise das Material des Dosenkörpers umfasst.

Die die mindestens eine Einführzone umgebene Rippe kann je nach Ausgestaltung auch eine oder mehrere Unterbrechungen aufweisen. D.h. heisst die Rippe muss nicht um die Einführzone umlaufend ausgebildet sein. Mit Vorzug umgibt die mindestens eine Rippe ebenfalls die die Einführzone umgebene Dünnstelle. Mit Vorteil erstreckt sich die Rippe im Wesentlichen normal zur oben definierten Verbindungsrichtung. Unter im Wesentlichen normal werden ebenfalls Winkelabweichungen von +/- 10° zur Verbindungsrichtung verstanden. Je nach Lage der Einführzone kann es sich jedoch anbieten, wenn eine Ausprägung der Rippe um den Umfang der Einführzone variiert. Beispielsweise kann es vorteilhaft sein, wenn die Rippe zumindest bereichsweise wulstartig und/oder bereichsweise tunnelartig ausgebildet ist. Ein tunnelartiger Abschnitt der Rippe ist besonders von Vorteil auf einem Abschnitt der Membran, welcher sich in axialer Richtung an der gleichen Position wie der Übergangsbereichs der Dosenwand befindet. In diesem Fall weist die Membranoberfläche in der Regel eine dreidimensionale Form auf. Wenn die Rippe zumindest bereichsweise auf einem Teil der Membran angeordnet ist, der winkelig zur axialen Richtung liegt, ist es vorteilhaft, wenn die Rippe derart ausgestaltet ist, dass ein distales Ende der Rippe dennoch in einer Ebene liegt, die parallel zur axialen Richtung und insbesondere normal zur Verbindungsrichtung angeordnet ist. Dies kann zu einer zusätzlichen Unterstützung der eingeführten Installationsleitung beitragen. Dies ist insbesondere dann von Vorteil, wenn die eingeführten Installationsleitungen bereits mit einem grösseren Positionsversatz und/oder Winkelversatz eingeführt wurden und die Membran dadurch besonders belastet ist.

Mit Vorteil sind ergänzend mehrere Versteifungsstege vorhanden, sodass die Versteifungsstruktur mit dem Rand der Dosenöffnung um den Umfang des Randes der Dosenöffnung verteilt verbunden ist. Mit Vorteil verbindet der mindestens eine Versteifungssteg eine Rippe mit dem distalen Ende des Tunnels. Vorteilhafterweise verbinden jedoch mehrere Versteifungsstege sternförmig die mindestens eine Rippe mit dem Rand der Dosenöffnung. So kann ein optimaler Halt eines eingeführten Installationsrohres auch bei grösseren Versätzen / Lagetoleranzen der Installationsleitung gewährleistet werden. D.h. pro Rippe, respektive pro Einführzone, können mehrere Versteifungsstege vorgesehen sein, welche die Rippe mit dem Rand der Dosenöffnung, respektive dem distalen Ende des Tunnels verbinden. Der Rand der Dosenöffnung kann unterteilt werden in einen vorderseitigen und einen rückseitigen Randabschnitt sowie zwei dazwischenliegende lateralen Randabschnitte. Die beiden lateralen Randabschnitte verbinden also den vorderseitigen und den rückseitigen Randabschnitt miteinander und liegen sich einander gegenüber. Für eine gute Stabilität bietet sich an, wenn jede Rippe an einem jeden lateralen Randabschnitt des Randes der Dosenöffnung mit einem Versteifungssteg verbunden ist. Weiterhin bietet es sich an, wenn jede Rippe in axialer Richtung mit dem vorderseitigen und/oder dem rückseitigen Randabschnitt verbunden ist.

Je nach Ausgestaltung kann die die Dosenöffnung initial verschliessende Membran mindestens zwei Einführzonen aufweisen. Diese sind mit Vorteil in die axiale Richtung zueinander versetzt angeordnet. Vorteilhafterweise befinden sich die mindestens zwei Einführzonen zudem an dergleichen Umfangsposition. Die zwei oder die mehreren Einführzonen können je eine diese zumindest bereichsweise umgebende Rippe aufweisen. Mit Vorteil berühren sich die jeweiligen Rippen.

Alternativ können die jeweiligen Rippen ebenfalls durch einen Versteifungssteg miteinander verbunden sein. Beides bewirkt eine verbesserte Steifigkeit der Membran und Unterstützung der eingeführten Installationsleitung. Die paarweise Anordnung der Einführzonen den Vorteil, dass Installationsleitungen in der gleichen Nut /Bohrung im Holz an die Installationsdose geführt werden können. Hierfür ist es weiter vorteilhaft, wenn sich die die Rippen berühren, d.h. die Einführzonen so nah wie möglich aneinander platziert sind.

Der Dosenkörper weist in einem vorderseitigen Bereich des Dosenkörpers mindestens eine Befestigungsöffnung auf. Die Befestigungsöffnung dienen dazu ein Befestigungselement zur Befestigung einer Elektroinstallation in dem Installationsraum aufzunehmen. Das Befestigungselement kann eine Schraube, ein Stift oder ähnliches sein. Die mindestens eine Befestigungsöffnung ist mit Vorteil innerhalb einer Kontur eines Randes des Dosenkörpers angeordnet. Die mindestens eine Befestigungsöffnung erstreckt sich hierbei in der Regel in die axiale Richtung. Somit kann sich die mindestens eine Befestigungsöffnung zumindest bereichsweise entlang der Dosenwand, insbesondere entlang einer Innenseite der Dosenwand erstrecken. Hierzu kann an der Dosenwand innen eine Befestigungsstruktur angeformt sein, welche die Befestigungsöffnung umgibt. Für eine einfache und genaue Ausrichtung ist es von Vorteil, wenn die mindestens eine Befestigungsöffnung (in Bezug zur umlaufenden Dosenwand) an einer gleichen Umfangsposition angeordnet ist, wie die mindestens eine Dosenöffnung, respektive die mindestens eine Einführzone. Mit Vorteil ist die mindestens eine Befestigungsöffnung aus der axialen Richtung betrachtet mittig in Bezug zu einer Dosenöffnung angeordnet. Insbesondere bietet es sich, dass die mindestens eine Befestigungsöffnung mittig in Bezug zu einer jeweiligen Einführzone angeordnet ist, bzw. eine jede Befestigungsöffnung aus der axialen Richtung betrachtet mittig in Bezug zu einer jeweiligen Einführzone angeordnet ist. Die Befestigungsstruktur kann dann in axialer Richtung an dem Tunnel der Dosenöffnung enden und mit diesem wirkverbunden sein. Mit Vorteil sind mehrere Befestigungsöffnungen vorhanden, insbesondere können zwei oder vier Befestigungsöffnungen vorgesehen werden. Es kann von Vorteil sein, wenn pro Einführöffnung eine Befestigungsöffnung vorhanden ist. Bei vier Einführöffnungen sind also vier Befestigungsöffnungen vorhanden.

Für eine gute Verankerung in der Wandöffnung, können an dem vorderseitigen Bereich auf der Dosenwand ferner Verankerungselemente angeordnet sein. Der vorderseitige Bereich kann je nach Ausgestaltung die vorderseitige Hälfte der Installationsdose umfassen. Jedoch sind auch andere Abmasse möglich, wie beispielsweise die vorderen 20%, 30% oder 40% der Dosenwand (in axialer Richtung und gemessen vom Rand aus). Eine Anordnung der Verankerungselemente in der Nähe der Installationsöffnung bewirkt, dass die Verankerungselemente in eine Wandöffnung eingreifen können, wenn diese dort verbaut wird. Die Verankerungselemente können hierbei integral mit der Dosenwand ausgestaltet sein. Somit können die Verankerungselemente Teil des Dosenkörpers sein, d.h. diese umfassen die erste Kunststoffkomponente. Mit Vorteil sind die Verankerungselemente jeweils nur auf den zweiten Umfangsbereichen angeordnet. Die Verankerungselemente können in mindestens zwei in axialer Richtung voneinander beabstandeten Reihen angeordnet sein. Mit Vorteil ist die eine oder sind die mehreren Verankerungselemente derart ausgestaltet, dass die Kraft zum Einstecken der Installationsdose in die Wandöffnung geringer ist als die Kraft zum Entnehmen der Installationsdose aus der Wandöffnung. Dies kann erreicht werden, wenn die Verankerungselemente in dem montierten Zustand einen Widerhaken in der Wand in die axiale Richtung und in Richtung der Installationsöffnung ausbilden. Beispielsweise kann das Verankerungselement oder können die mehren Verankerungselemente hierzu lamellenartig und/oder keilförmig und/oder mit mindestens einem Sägezahn ausgebildet sein.

Je nach Anwendung kann das Verankerungselement oder die mehreren Verankerungselemente dünnwandig und/oder lamellenartig ausgestaltet sein, sodass dieses von der Dosenwand absteht. Mit Vorteil sind die Basen der Verankerungselemente, mit welchem diese an der Dosenwand befestigt sind und in diese übergehen, parallel zum Rand der Installationsdose angeordnet. Je nach Ausgestaltung können die Verankerungselemente sich weiter in einer Ebene parallel zum Rand der Installationsöffnung erstrecken oder winkelig von der Dosenwand abstehen. Beispielsweise können die dünnwandigen Verankerungselemente in Richtung der Installationsöffnung geneigt von der Dosenwand abstehen. Für einen besseren Halt in der Wand, können die Verankerungselemente unter Krafteinwirkung (beim Einstecken der Installationsdose) zumindest bereichsweise plastisch und/oder elastisch verformbar sein, sodass die Installationsdose schwerer aus der Wand zu entfernen ist. Beispielsweise können die Verankerungselemente derart verformt werden, dass die Verankerungselemente nach der Montage stärker in Richtung der Installationsöffnung geneigt sind und folglich mehr Kraft benötigt wird um die Installationsdose wieder aus der Wandöffnung zu lösen. Hierfür können die Verankerungselemente an ihrer Basis einen definierten Verformungsbereich für die plastische und/oder elastische Deformation aufweisen. Um die kontrollierte Deformation der Verankerungselemente beim Einbau zu begünstigen können die Verankerungselemente an ihrer Basis auf der von der Installationsöffnung weggewandten Seite einen grösseren Übergangsradius zur Dosenwand aufweisen als auf der zu der Installationsöffnung hingewandten Seite.

Je nach Anwendung können ebenfalls Verankerungselemente vorhanden sein, welche an einer von der Dosenwand abgewandten äusseren Seite Sägezähne aufweisen, welche eine Verankerung in dem Material der Hohlwand und in der Hohlwandöffnung ermöglichen. Ein guter Halt wird erzielt, wenn die (Spitzen der) Sägezähne in Richtung der Installationsöffnung geneigt ausgerichtet sind um den beschriebenen Effekt eines Widerhakens auszubilden. Die Verankerungselemente können beispielsweise jeweils mehrere in axialer Richtung hintereinander angeordnete Sägezähne aufweisen.

Je nach Ausführung kann die Installationsdose um den Umfang verteilte Klemmrippen umfassen um die Installationsdose zumindest bereichsweise in der Wandöffnung einzuklemmen. Mit Vorteil erstreckt sich die Klemmrippen je in die axiale Richtung, jedoch sind auch andere Ausrichtungen denkbar. Die Klemmrippen sind mit Vorteil zumindest bereichsweise rückseitig der Verankerungselemente angeordnet. D.h. diese können zumindest bereichsweise zwischen den Verankerungselementen und dem Übergangsbereich bzw. Dosenboden angeordnet sein, sodass die Installationsdose (vor dem Verankern) zunächst rückseitig in der Wandöffnung mittels der Klemmrippen vorpositioniert werden kann. Je nach Anwendung können sich die jeweiligen Klemmrippen jedoch auch in den vorderseitigen Bereich der Dosenwand erstrecken, in welchem die Verankerungselemente angeordnet sind. Die Anordnung ermöglicht es, dass die Klemmrippen die Installationsdose während der Montage und vor dem Eingreifen der Verankerungselemente in der Wandöffnung vorpositionieren und/oder vorfixieren. Für eine gleichmässige um den Umfang verteilte Klemmkraft und eine daraus resultierende gute Vorpositionierung, können multiple um den Umfang der Dosenwand verteilte Klemmrippen verwendet werden. Mit Vorteil sind die Klemmrippen je zwischen den ersten und zweiten Umfangsbereichen angeordnet. Die Klemmrippen können weiter derart dimensioniert werden, dass die Installationsdose mit den Klemmrippen genau in die Wandöffnung passt, sodass die Klemmrippen die Wandöffnung beim Einklemmen eines Bereiches der Installationsdose nicht beschädigt. Mit Vorteil erstrecken sich die Verankerungselemente jedoch in eine radiale Richtung weiter über eine Kontur der Aussenseite als die mindestens eine Klemmrippe, da die Verankerungselemente (im Gegensatz zu den Klemmrippen) in die Wand eingreifen. Die Klemmrippen sorgen so ebenfalls für eine gleichmässige Kraftverteilung auf die Verankerungselemente und somit für einen besseren Halt der Dose in der Wandöffnung. Für eine gute Einführung der Dose können die jeweiligen rückseitigen Enden der Klemmrippen abgeschrägt sein. Mit Vorteil gehen die jeweiligen abgeschrägten rückseitigen Enden der Klemmrippen in einen abgeschrägten Übergangsbereich des Dosenkörpers über.

Für bestimmte Anwendungen bietet es sich an, wenn die Installationsdose an der Dosenwand und/oder auf dem Dosenboden Bandschutzsegmente umfasst. Die Brandschutzsegmente umfassen mit Vorteil ein intumeszierendes Material. Mit Vorteil sind diese jeweils im Innenraum an dem Dosenkörper angebracht, insbesondere angeformt. Mit Vorteil sind Brandschutzelemente je innen auf der Dosenwand zwischen den Tunneln und den Befestigungsstrukturen angeordnet. Weiterhin kann ein Brandschutzelement auf dem Dosenboden angeordnet sein.

Das Brandschutzelement auf dem Dosenboden kann einstückig mit den zwischen den Tunneln angeordneten Brandschutzsegmenten ausgestaltet sein. Die Tunnel geben hierbei im Brandfall den aufquellenden intumeszierenden Material eine Richtung vor und sorgen für eine stabilisierende Wirkung der Elektroinstallation in der Wandöffnung. Da intumeszierendes Material oftmals elektrisch leitend ist, bietet es sich an, dass die jeweiligen Brandschutzsegmente zu dem Installationsraum der Installationsdose hin mit einer Schicht aus einem weichelastischen Material überzogen sind. Dieses kann integral mit dem weichelastischen Material der Membranen ausgestaltet sein.

Für eine gute Ausrichtung kann der Dosenkörper mittig einer der Dosenöffnungen mindestens ein Positioniermittel zum Positionieren der Installationsdose in einer Wandöffnung aufweisen. Mit Vorteil ist mittig jeder Dosenöffnung mindestens ein Positioniermittel angeordnet. Das mindestens eine Positioniermittel kann an dem die Installationsöffnung umgebenden Rand der Installationsdose angeordnet sein und/oder an der Aussenseite der Installationsdose. Falls dieses an der Aussenseite der Installationsdose angeordnet ist, steht dieses mit Vorteil aus der axialen Richtung betrachtet über den die Installationsöffnung umgebenden Rand des Dosenkörpers in radialer Richtung hinaus. Das Positioniermittel kann eine Kerbe sein oder umfassen. Alternativ oder ergänzend kann das Positioniermittel eine Rippe und/oder optisch erkennbare Markierung umfassen.

Die erste Kunststoffkomponente ist in der Regel ein Hartkunststoff (z.B. Polypropylen (PP), Polycarbonat (PC), Polyethylen (PE), Polyamid (PA), Polyphenylensulfid (PPS)). Das erste Material kann hierbei ein Spritzgussmaterial sein, respektive der Dosenkörper kann durch Spritzguss hergestellt sein. Je nach Anwendung kann auch das intumeszierende Material und/oder das weichelastische Material ein Spritzgussmaterial sein. D.h. die diese können in einem Spritzgussverfahren an dem Dosenkörper aufgebracht werden.

Anhand der in den nachfolgenden Figuren gezeigten Ausführungsbeispiele und der dazugehörigen Beschreibung werden Aspekte der Erfindung näher erläutert. Es zeigen:
- Fig. 1: Eine perspektivische Darstellung einer Installationsdose gemäss der Erfindung;
- Fig. 2: Die Installationsdose gemäss Figur 1 in einer Ansicht von der Seite;
- Fig. 3: Die Installationsdose gemäss Figur 1 in einer Ansicht von oben;
- Fig. 4: Eine erste Schnittansicht A - A der Installationsdose gemäss Figur 3;
- Fig. 5: Eine zweite Schnittansicht B - b der Installationsdose gemäss Figur 3.

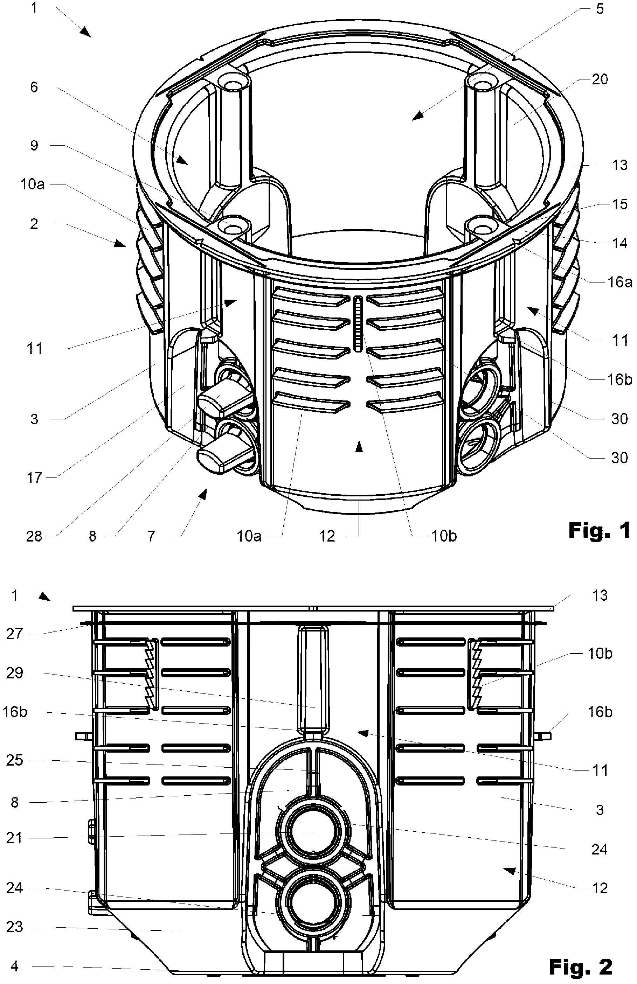

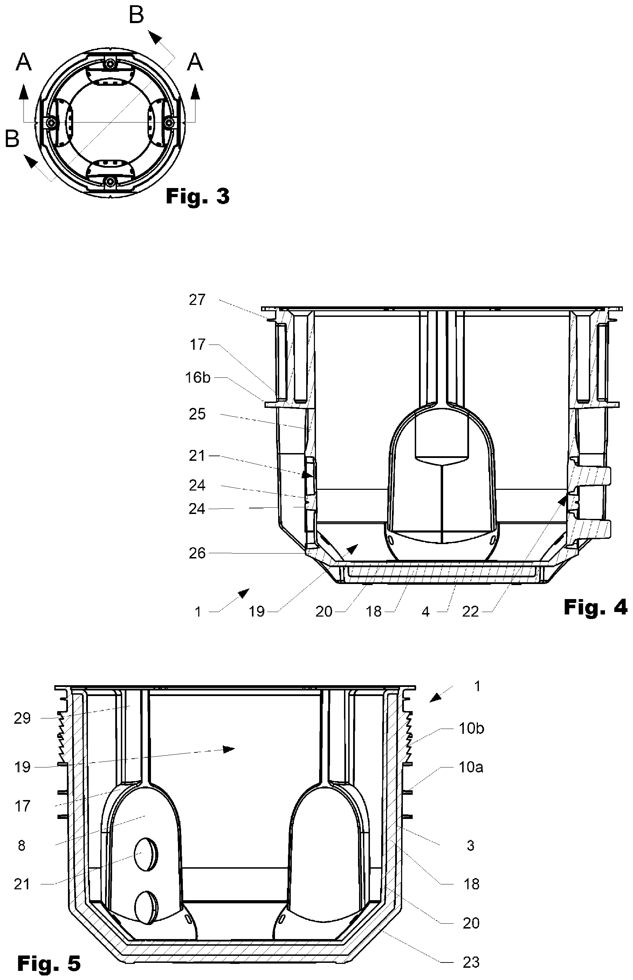

**Figur 1** - **Figur 5** zeigen eine Variante einer Installationsdose 1 gemäss der Erfindung. Die dargestellte Installationsdose 1 für Elektroinstallationen umfasst einen Dosenkörper 2 aus einer ersten Kunststoffkomponente. Der Dosenkörper weist eine röhrenförmige Dosenwand 3 und einen Dosenboden 4 auf. Die Dosenwand 3 geht in den Dosenboden 4 über, respektive diese weist erkennbar einen Übergangsbereich 23 auf. Je nach Anwendung kann der Übergangsbereich 23 jedoch auch weggelassen werden. Wie besonders gut erkennbar in **Figur 3** ist die dargelegte Installationsdose 1 aus der axialen Richtung betrachtet achsensymmetrisch ausgestaltet. Andere Ausgestaltungen sind jedoch ebenfalls denkbar. Die Dosenwand 3 erstreckt sich in eine axiale Richtung um eine Mittelachse. Dem Dosenboden 4 gegenüberliegend ist eine Installationsöffnung 6 durch welche ein Innenraum 5 des Dosenkörpers 2 zugänglich ist. In dem Dosenkörper 2 sind weitere Dosenöffnungen 7 angeordnet. Vorliegend sind diese weitestgehend in einem rückseitigen Bereich des Dosenkörpers 2 angeordnet und in einem initialen Zustand von einer jeweiligen Membran 8 aus einem weichelastischen Material verschlossen. Eine jeweilige Dosenöffnung 7 ist hierbei in einem ersten Umfangsbereich 11 des Dosenkörpers 2 angeordnet. An einem vorderseitigen Ende der röhrenförmigen Dosenwand 3 weist der Dosenkörper 2 ferner einen seitlich von der Dosenwand 3 abragenden Rand 13 auf. In dem ersten Umfangsbereich 11 ist ein Randbereich 14 des Randes 13 je über eine Sollbruchstelle 15 abtrennbar. Unterhalb des Randes 13 und von diesem mit Vorzug beabstandet steht von der Dosenwand 3 eine umlaufende Dichtung 27 ab. Diese kann das weichelastischen Material und/oder die erste Kunststoffkomponente umfassen.

An einer Aussenseite der Dosenwand 3 sind in dem vorderseitigen Bereich Verankerungselemente 10a, 10b zur Verankerung der Installationsdose 1 in einer Wandöffnung angeordnet. Diese befinden sich jedoch lediglich in einem zweiten Umfangsbereich 12 des Dosenkörpers 2. Der Dosenkörper 2 weist also in eine Umfangsrichtung mehrere einander abwechselnde erste und zweite Umfangsbereiche 11, 12 auf. Zwischen den Umfangsbereichen 11, 12 sind je Klemmrippen 30 zum Vorpositionieren der Installationsdose 1 in der Wandöffnung angeordnet.

Die Klemmrippen 30 sind erkennbar so angeordnet, dass diese beim Einstrecken der Installationsdose 1 in die Wandöffnung vor den Verankerungselementen 10a, 10b die Wandöffnung kontaktieren. Die ersten Verankerungselemente 10a sind dünnwandig und lamellenartig ausgestaltet und parallel zum Rand 13 angeordnet. Die zweiten Verankerungselemente 10b erstrecken sich hingegen in die axiale Richtung und weisen an einer von der Dosenwand abgewandten äusseren Seite Sägezähne auf. Die (Spitzen der) Sägezähne sind in Richtung der Installationsöffnung geneigt ausgerichtet um den oben beschriebenen Effekt eines Widerhakens auszubilden.

Im Bereich der Installationsöffnung 6 weist der Dosenkörper 2 mehrere sich in die axiale Richtung erstreckende Befestigungsöffnungen 9 auf. Die Befestigungsöffnungen 9 sind je an einer gleichen Umfangsposition angeordnet, wie die Dosenöffnungen 7. Eine jede Befestigungsöffnung 9 ist in einer Befestigungsstruktur 29 angeordnet, welche innen an die Dosenwand 3 angeformt ist.

Weiterhin weist der Dosenkörper 2 an der Umfangsposition der jeweiligen Dosenöffnungen 7 und Befestigungsöffnungen 9 je zwei Positioniermittel 16a, 16b zum Positionieren der Installationsdose 1 in der Wandöffnung auf. Während das erste Positioniermittel 16a am abtrennbaren Randbereich 14 angebracht ist, ist das zweite Positioniermittel 16b an der Aussenseite der Dosenwand 3 oberhalb der Dosenöffnungen 7 angeordnet.

Um eine jeweilige Dosenöffnung 7 weist der Dosenkörper 2 weiter einen in den Innenraum 5 hineinragenden Tunnel 17 auf. Der Tunnel 17 angeordnet auf der Dosenwand 3 erstreckt sich hierbei im Wesentlichen in eine Richtung senkrecht zur axialen Richtung. Im Bereich des Dosenbodens erstreckt sich der Tunnel 17 hingegen in die axiale Richtung. Folglich ist ein distales Ende des Tunnels 17 zu der Aussenwand der Dosenwand 3 in Richtung des Innenraums 5 des Dosenkörpers 2 versetzt angeordnet. Eine jede Befestigungsstruktur 29 ist an einem in die axiale Richtung rückseitigen Ende an dem Tunnel 17 angeformt. An dem distalen Ende des Tunnels 17 ist die die Dosenöffnung 7 verschliessende Membran 8 angeordnet. Somit ist die Membran 8 also zu der Aussenwand der Installationsdose 1 nach innen versetzt angeordnet. Vorzugsweise weist die Membran 8 mindestens eine Versteifungsstruktur auf, welche mindestens eine Einführzone 21 umgibt. Vorliegend sind zwei Einführzonen 21 pro Membran 8 vorgesehen. In einer Membran 8 sind die Einführzonen 21 herausgetrennt dargestellt, so dass die Einführöffnungen für die Installationsleitungen ersichtlich werden (vgl. z.B. **Figur 1**)**.** Für eine Heraustrennung der Einführzonen 21 weisen diese jeweils Laschen 28 auf, an welchen ein Monteur ziehen kann und so die jeweilige Einführzone 21 entlang einer hierfür vorgesehenen Dünnstelle 22 heraustrennen kann (vgl. **Figur 4**). Die jeweiligen Versteifungsstrukturen der Membranen 8 umfassen eine je die Einführzone 21 umgebene Rippe 24 und mehrere die jeweiligen Rippen 24 mit einem Rand der Dosenöffnung 7 verbindende Versteifungsstege 25. Erkennbar umfasst derjenige Teil der Rippe 24, welche sich auf Höhe des Übergangsbereichs 23 befindet, einen tunnelartigen Abschnitt 26, welcher eine eingeführte Installationsleitung besser positioniert. In der Schnittansicht gemäss **Figur 4** ist ferner erkennbar, dass zwischen einer jeder Einführzone und der diese umgebende Rippe eine Dünnstelle 22 angeordnet ist.

Wie am besten in **Figur 5** erkennbar, kann die Installationsdose 1 je nach Anwendung in den jeweiligen zweiten Umfangsbereichen 11, 12 und/oder auf dem Dosenboden 4 Brandschutzsegmente 18 umfassen. Die Brandschutzelemente 18 können miteinander integral verbunden sein. Diese sind jeweils im Innenraum 5 an dem Dosenkörper 2 angebracht, insbesondere angeformt. Um eine Interaktion mit der im Installationsraum zu installierenden Elektroinstallation zu vermeiden, können die Brandschutzsegmente 18 zu dem Installationsraum 19 der Installationsdose 1 hin von einer isolierenden Schicht 20 überzogen sein. Die isolierende Schicht 20 kann wiederum integral mit der Membran 8 ausgestaltet sein.

### LISTE DER BEZUGSZEICHEN

| | | | |
|---|---|---|---|
| 1 | Installationsdose | 16 | Positioniermittel |
| 2 | Dosenkörper | 17 | Tunnel |
| 3 | Dosenwand | 18 | Bandschutzsegment |
| 4 | Dosenboden | 19 | Installationsraum |
| 5 | Innenraum | 20 | Isolierende Schicht |
| 6 | Installationsöffnung | 21 | Einführzone |
| 7 | Dosenöffnung | 22 | Dünnstelle |
| 8 | Membran | 23 | Übergangsbereich |
| 9 | Befestigungsöffnung | 24 | Rippe |
| 10 | Verankerungselement | 25 | Versteifungssteg |
| 11 | Erster Umfangsbereich | 26 | Tunnelartiger Abschnitt |
| 12 | Zweiter Umfangsbereich | 27 | Dichtung |
| 13 | Rand | 28 | Lasche |
| 14 | Randbereich | 29 | Befestigungsstruktur |
| 15 | Sollbruchstelle | 30 | Klemmrippen |

## Patentansprüche

1. Installationsdose (1) für den Einbau in Massivholzwände umfassend
a. einen Dosenkörper (2) aus einer ersten Kunststoffkomponente mit
i. einem Dosenboden (4) und einer in diesen übergehenden, röhrenförmigen Dosenwand (3), die sich in eine axiale Richtung erstreckt,
ii. einer dem Dosenboden (4) gegenüberliegenden Installationsöffnung (6), über die ein Innenraum (5) des Dosenkörpers (1) zugänglich ist, wobei
b. der Dosenkörper (2) mindestens eine Dosenöffnung (7) aufweist, welche in einem initialen Zustand von einer jeweiligen Membran (8) aus einem weichelastischen Material verschlossen ist,
c. der Dosenkörper (2) in einem vorderseitigen Bereich des Dosenkörpers (2) mindestens eine sich in die axiale Richtung erstreckende Befestigungsöffnung (9) aufweist, und
d. die mindestens eine Befestigungsöffnung (9) an einer gleichen Umfangsposition angeordnet ist, wie die mindestens eine Dosenöffnung (7).

2. Installationsdose (1) gemäss Patentanspruch 1, **dadurch gekennzeichnet, dass** der Dosenkörper (2) an der Umfangsposition der mindestens einen Befestigungsöffnung (9) ebenfalls ein Positioniermittel (16) zum Positionieren der Installationsdose (1) in einer Wandöffnung aufweist.

3. Installationsdose (1) gemäss einem der vorangehenden Patentansprüche, **dadurch gekennzeichnet, dass** der Dosenkörper (2) um die mindestens eine Dosenöffnung (7) einen in den Innenraum hineinragenden Tunnel (17) aufweist an dessen distalen Ende die jeweilige Membran (8) angeformt ist.

4. Installationsdose (1) gemäss einem der vorangehenden Patentansprüche, **dadurch gekennzeichnet, dass** die jeweilige Membran (8) mindestens eine heraustrennbare Einführzone (21) umfasst, welche zumindest bereichsweise von einer Dünnstelle (22) umgeben ist.

5. Installationsdose (1) gemäss Patentanspruch 4, **dadurch gekennzeichnet, dass** die jeweilige Membran (8) eine die mindestens eine Einführzone (21) umgebene Rippe (24) und mindestens einen Versteifungssteg (25) umfasst, wobei der mindestens eine Versteifungssteg (25) die Rippe (24) mit einem Rand der Dosenöffnung (7) verbindet.

6. Installationsdose (1) gemäss Patentanspruch 5, **dadurch gekennzeichnet, dass** die Rippe (24) zumindest bereichsweise auf einem Teil der Membran (8) angeordnet ist, der winkelig zur axialen Richtung liegt, und ein distales Ende der Rippe (24) in einer Ebene liegt, die parallel zur axialen Richtung angeordnet ist.

7. Installationsdose (1) gemäss Patentanspruch 5 oder 6, **dadurch gekennzeichnet, dass** eine Ausprägung der Rippe (24), insbesondere eine Länge der Rippe (24), um den Umfang der Einführzone (21) variiert.

8. Installationsdose (1) gemäss einem der vorangehenden Patentansprüche, **dadurch gekennzeichnet, dass** der Dosenkörper (2) in dem vorderseitigen Bereich Verankerungselemente (10) umfasst.

9. Installationsdose (1) gemäss einem der vorangehenden Patentansprüche **dadurch gekennzeichnet, dass** die Dosenwand (3) mehrere in eine Umfangsrichtung einander abwechselnde erste und zweite Umfangsbereiche (11, 12) umfasst, wobei in einem jeden ersten Umfangsbereich (11) eine Dosenöffnung (7) angeordnet ist.

10. Installationsdose (1) gemäss Patentanspruch 8 und 9, **dadurch gekennzeichnet, dass** die Verankerungselemente (10) lediglich auf den zweiten Umfangsbereichen (12) angeordnet sind.

11. Installationsdose (1) gemäss Patentanspruch 9 oder 10, **dadurch gekennzeichnet, dass** die ersten Umfangsbereiche (11) abgeflacht ausgestaltet sind und die zweiten Umfangsbereiche (12) gekrümmt und einer gemeinsamen Kreiskontur folgend ausgestaltet sind.

12. Installationsdose (1) gemäss einem der Patentansprüche 9 bis 11, **dadurch gekennzeichnet, dass** zwischen den ersten und zweiten Umfangsbereichen (11, 12) sich in axiale Richtung erstreckendende Klemmrippen (30) zum Vorpositionieren der Installationsdose (1) in einer Wandöffnung angeordnet sind.

13. Installationsdose (1) gemäss einem der vorangehenden Patentansprüche, **dadurch gekennzeichnet, dass** die Installationsdose (1) auf der Dosenwand (3) und/oder auf dem Dosenboden (4) Brandschutzsegmente (18) umfasst, welche jeweils im Innenraum (5) an dem Dosenkörper (2) angebracht, insbesondere angeformt sind.

14. Installationsdose (1) gemäss Patentanspruch 13, **dadurch gekennzeichnet, dass** die Brandschutzsegmente (18) zu einem Installationsraum (19) der Installationsdose (1) hin von einer isolierenden Schicht (20) überzogen sind.

15. Installationsdose (1) gemäss einem der vorangehenden Patentansprüche, **dadurch gekennzeichnet, dass** die Installationsdose (1) aus der axialen Richtung betrachtet achsensymmetrisch ausgestaltet ist.
